# EUROPEAN PATENT SPECIFICATION

(11) **EP 4 319 896 B1**
(45) Date of publication and mention of the grant of the patent: **09.07.2025**
(21) Application number: 21717420.0
(22) Date of filing: 07.04.2021
(51) Int. Cl.: B01D 1/18, B05B 1/02, B05B 7/00, F26B 3/12

(54) **A LIQUID DISTRIBUTOR OF A ROTARY ATOMIZER AND SPRAY DRYING APPARATUS COMPRISING A ROTARY ATOMIZER INCLUDING SUCH A LIQUID DISTRIBUTOR**
FLÜSSIGKEITSVERTEILER EINES ROTATIONSZERSTÄUBERS UND SPRÜHTROCKNUNGSVORRICHTUNG MIT EINEM ROTATIONSZERSTÄUBER MIT SOLCH EINEM FLÜSSIGKEITSVERTEILER
DISTRIBUTEUR DE LIQUIDE D'UN ATOMISEUR ROTATIF ET APPAREIL DE SÉCHAGE PAR PULVÉRISATION COMPRENANT UN ATOMISEUR ROTATIF COMPRENANT UN TEL DISTRIBUTEUR DE LIQUIDE

(43) Date of publication of application: 14.02.2024
(73) Proprietor: GEA Process Engineering A/S, 2860 Søborg (DK)
(72) Inventor: RABENOW, Lisa, 2860 Søborg (DK); NIELSEN, Erling Skov, 2860 Søborg (DK); HANSEN, Asger Jørgen Thor, 2860 Søborg (DK); GREIBE, Tine, 2860 Søborg (DK)
(74) Representative: AWA Denmark A/S
(86) International application number: PCT/EP2021/059063
(87) International publication number: WO 2022/214171

(56) References cited:
- CN-A- 108 379 863
- GB-A- 990 826
- US-A- 4 874 400
- US-A1- 2006 019 023

## Description

### Technical Field

The present invention relates to a rotary atomizer comprising a rotary atomizer wheel and a liquid distributor used in a spray drying apparatus. The liquid distributor comprises at least one volute part for fluid communication between an inlet and a rotary atomizer wheel of the rotary atomizer. The invention furthermore relates to a spray drying apparatus comprising a rotary atomizer including such a liquid distributor.

### Background Art

Spray dryers are used to produce powdery products from a liquid feed, and in a spray dryer a liquid feed material is transformed into a dried particulate form by spraying the feed material into a hot drying medium. A spray dryer generally comprises an atomizer that distributes the liquid feed into appropriately sized droplets so that the hot drying medium can evaporate the moisture from the liquid droplets and provide the desired powder. The atomizer is typically located in the top section of the drying chamber and the hot drying medium enters the drying chamber at a suitable position of the drying chamber so that the droplets of the liquid feed will be transformed to a dry powder when falling down in the drying chamber.

Spray drying is used in the manufacture of various powdery products from dairy-based, chemical or pharmaceutical feed liquids, although other uses involve more corrosive environments thus requiring more attention to protection of the internal components of the rotary atomizer. A specific spray drying process is known as spray drying absorption, and the corresponding spray dryer is, in the context of the present disclosure, referred to as a "spray dryer absorber". In spray drying absorption, a flue gas is introduced into the spray drying apparatus in the top section so that the flue gas will meet the liquid feed droplets. The composition of the feed liquid is selected to absorb gaseous components, in particular pollutants, of the flue gas thereby removing the gaseous components from the flue gas. For example, lime, e.g. CaO or Ca(OH)2, can be used as an absorbent in spray drying absorption to remove pollutants, such as SO2, SO3, HCl, Hg, and dioxins, from flue gasses from fossil fuel power plants or waste incinerators. A spray drying absorption process can be designed to remove specific pollutants from specific flue gasses by selection of appropriate absorbents, but in general flue gasses are highly corrosive.

Rotary atomizers are used in a number of industries including pharma, dairy, food, chemical and emission control. The function of the rotary atomizer is to atomize the fluid feed(s) for onward processing, such as spray drying. Examples of prior art rotary atomizers include EP0035344 which describes a method for atomizing liquid material in which spray drying apparatus is used that comprises a rotating atomizer wheel and an overlying stationary liquid distributor and US3716193 which describes a liquid distributor for feeding liquid to a rotating atomizer. Another example is provided by US4874400.

In spray dryers used in emission control, abrasive and basic liquids are often fed to the rotary atomizer. For example, flue gas, which may be combustion exhaust gas produced at a power plant, often contains aluminum silicates, minerals, halogens and/or metals such as lead, chromium and nickel. Further, lime slurry is also present, which contains calcium hydroxide and typically has a pH of around 12.

In an emission control setting, double liquid distributors are often used. In such circumstances, one feed may comprise an aqueous solution of slaked lime with erosive and abrasive particles. The second feed may comprise waste-water with a large quantity of chlorine.

Liquid distributors intended for use in these conditions are conventionally made from a form of Hastelloy^{®}, which as will be understood by the skilled person, is a nickel-chromium-iron-molybdenum alloy. In particular, the parts of the liquid distributor which are subject to the corrosive or abrasive liquids, and thus subjected to excessive wear, are made from Hastelloy^{®} while the remaining parts may be produced from conventional steels such as stainless steel. Whilst liquid distributors in which at least some of the components are made from a Hastelloy^{®} have been found to provide an acceptable solution, it is noted that Hastelloy^{®} liquid distributors are expensive (typically around 4 times the cost of a stainless-steel alternative). They are also heavy and as such handling of the liquid distributor, for example during mounting, can be difficult. The lifetime of such a product is expected to be in the region of 5-7 years.

Previous attempts to provide an alternative have been unsuccessful. For example, the use of Polytetrafluoroethylene (PTFE) as an alternative material for liquid distributors has previously been tested, however, with limited success, the PTFE material suffering from a reduced abrasion resistance and reduced long-term sealing properties compared to Hastelloy^{®} liquid distributors.

The present invention has been made from a consideration of this.

### Summary of Invention

With this background it is an object of the present invention to provide a liquid distributor for a spray dryer absorber which is resistant to the corrosive and abrasive environment of an emission control (EMC) plant but is available at a lower cost and designed to ensure ease of assembly.

Thus, according to a first aspect of the present invention there is provided rotary atomizer comprising a liquid distributor and a rotary atomizer wheel for feeding liquid to a rotary atomizer wheel, the liquid distributor comprising at least one feed inlet and at least one volute part comprising a base portion, at least one inlet opening, a channel and an outlet opening, wherein the at least one feed inlet is in fluid communication with the rotary atomizer wheel through the at least one volute part, and the at least one volute part is made from a polyurethane or elastomer.

The rotary atomizer is suitable for a spray drying apparatus, in particular to spray drying process known as spray drying absorption, and the spray drying apparatus may also be referred to as a spray dryer absorber. Thus, the rotary atomizer may be a rotary atomizer for a spray dryer absorber. In a spray dryer absorber, the liquid feed is introduced into a chamber via the rotary atomizer wheel, and in the present context the chamber is referred to as an "absorption chamber"; in other contexts the chamber could be a drying chamber of an arbitrary spray drying apparatus.

The present rotary atomizer comprises a feed inlet at an inlet end, which feed inlet is in fluid communication with an atomizer wheel at the outlet end. In general, the feed inlet is provided with a liquid feed from a supply, e.g. a supply external to the rotary atomizer, and the rotary atomizer has a conduit or the like to provide the liquid feed to the atomizer wheel. The atomizer may have any design typically used in spray dryers, e.g. the atomizer may be a rotary atomizer. Exemplary atomizer, including rotary atomizers, are marketed by GEA Process Engineering A/S, Søborg, Denmark, e.g. rotary atomizers known under the names of F01A, F100, and F160.

The rotary atomizer may also comprise any other component for controlling the atomization of the liquid feed. For example, the rotary atomizer may comprise additional conduits or pipes for additional fluids or liquids, motors, pumps and/or actuators for moving components and/or fluids, cables for supplying electricity to electric and electronic components, and electric and electronic components. Collectively, such components are referred to as "inner parts" in the context of the disclosure. A rotary atomizer for a spray dryer absorber typically comprises moving parts, e.g. a motor, gear box, etc., and electrical and electronic components, which must be shielded from the corrosive environment, and the rotary atomizer therefore normally also comprises a protective member.

In the context of the present disclosure, the at least one volute part of the liquid distributor is made from polyurethane or an elastomer as an alternative to the conventional high-nickel alloy or superalloys, including but not limited to Hastelloy^{®}. The liquid distributor comprising a polyurethane or elastomer volute part displays a performance and durability comparable to or exceeding those of conventional liquid distributors, e.g. Hastelloy^{®} liquid distributors. In particular, the polyurethane and elastomer liquid distributors are resistant to the abrasive liquids fed through the feed inlet as well as the high and fluctuating pressures and temperatures applied to the system. In the context of the present invention, "abrasive liquids" are liquids comprising abrasive particles, such as but not limited to CaSO₄ and flue ash, also known as fly ash. In particular, the inventors have found that when subjecting the liquid distributor of the present disclosure to a liquid feed of water containing 10 % calcium and 20 % fly ash, at 0.4 bar inlet pressure, no visible wear or erosion of the inner channel of the volute was observed after a nearly 1000h test duration.

An additional benefit of the present inventive concept is that by using polyurethane or elastomer instead of superalloys the total cost of the liquid distributor is substantially reduced, providing an economically more feasible solution in the industry. Additionally, the lighter design of the presently contemplated liquid distributor ensures ease of assembly and a lowered risk of error during the installation of the liquid distributor in the spray drying absorber.

Overnight immersion of the liquid distributor in acidic solutions is used at some EMC plants in order to remove chalk and other slurry leftovers. The inventors have tested the resistance of polyurethane to some of the commonly used acidic solutions, including nitric acid, citric acid and acetic acid, and has found that the polyurethane is resistant to 2,5% solutions of citric acid and acetic acid and shows minor swelling when subjected to 24h and 72h immersion in a 2,5% nitric acid solution. Thus, the liquid distributor of the present inventive concept may be subjected to various acid treatments without compromising its operational properties.

For the present liquid distributor, the polyurethane or elastomer has a shore hardness in the range of 65A-100A or 20D-60D as measured on a Durometer according to the ASTM D2240 standard. A person with ordinary skill in the art will appreciate the suitability of such standard or similar ones for evaluating the hardness of a polyurethane or elastomer sample material. In the context of the present invention, the Shore A hardness scale and the Shore D hardness scale may both be used to provide the hardness values of the polyurethane or elastomer material. While the shore A hardness scale is generally used to evaluate the hardness of softer materials, the shore D hardness scale is more often used for the harder materials. Polyurethane materials often display shore hardness values in the higher range according to the A scale, i.e. approximately 65A-100A, and in the mid-range according to the D scale, i.e. approximately 20D-60D. Values in these ranges are typical for the hard, un-elastic polyurethane materials. In the present inventive concept, the hardness of the polyurethane and elastomer of the liquid distributor is chosen to provide a material which is capable of substantially holding its shape during operation and which can withstand the harsh environment of the EMC plant, including but not limited to high and fluctuating pressures and temperatures, as well as abrasive and erosive liquids. The ability of the polyurethane and elastomer to hold its shape is important to avoid leakage from the liquid distributor which can result in untimely and progressed deterioration of components of the spray drying apparatus as well as deposits leading to blockage or explosive situations. The choice of a suitable shore hardness of an individual component of the liquid distributor is based on the specific function of that component. For a liquid distributor operating in a non-abrasive environment, i.e. the volute parts not subjected to abrasive liquids, the components may be prepared from a material having a shore hardness resembling that of a stiff materials, e.g. above >90A. For components subjected to abrasive liquids, the material should instead have a shore hardness equal to that of a softer material, e.g. <90A, to ensure that the abrasive particles in the liquid will not bounce off the material and cause breakage and leaking from the liquid distributor. The choice of suitable shore hardness for the components of the liquid distributor is thus selected to both ensure durability and safety of the equipment as well as ease of construction.

In general, polyurethanes are formed by reacting a polyol (an alcohol with more than two reactive hydroxyl groups per molecule) with a diisocyanate or a polymeric isocyanate in the presence of suitable catalysts and additives. Since a variety of diisocyanates and polyols can be used to produce polyurethane, a broad spectrum of materials can be produced to meet the needs for specific applications. Polyurethane elastomers are part of the group of polyurethanes and is generally formed by combining hard (isocyanate) and elastic (polyol) parts. Thus, depending on the formulation of a given polyurethane, the material can be tailored to be thermosetting or thermoplastic, rigid and hard or flexible and soft.

In addition to the hardness of the polyurethane material, as determined by the Shore hardness, the material may be further characterized by its tensile and tear strength, impact resistance (e.g. resistance to abrasion and damping characteristics), resistance to heat and hydrolytic stability. A polyurethane or elastomer material suitable for the present inventive concept may, in addition to the defined shore hardness, be further characterized by being a non-foam type polyurethane. Additionally, the polyurethanes of the present inventive concept may be of a food-grade type polyurethane and thus may be used for liquid distributors in manufacturing settings wherein the polyurethane-based liquid distributor comes into contact with products intended for consumption.

Specific commercial products with defined shore hardnesses, as measured according to ASTM D2240 include, but are not limited to, the polyester thermoplastic polyurethane Estane^{®} 58070 from Lubrizol with a Shore A hardness of 70A, the toluene diisocyanate-(TDI)-based Adiprene^{®} LF800A from Adidas with a Shore A hardness of 80A, the thermoplastic polyurethane Texin^{®} 985AU from Covestro with a Shore A hardness of 85A and the thermoplastic polyurethane elastomer Elastollan^{®} 1190A16 from BASF with a Shore A hardness of 90A.

Alternatively, if providing a supplier, such as Dansk Gummi, Wilbrandt, Dansk Elastomer or the like, with the desired hardness of a polyurethane, it is within the general knowledge of the skilled person to produce polyurethane materials usable according to the invention.

In one embodiment of the present inventive concept, the polyurethane or elastomer has a shore hardness of 70A to 90A as measured according to the ASTM D2240 standard. The inventors have found that polyurethane or elastomer with these values display acceptable durability and performance when used in emission control (EMC) plants. For materials with shore hardness values in the lower range, constructional changes may be needed to ensure the functionality of the liquid distributor of the present inventive concept.

In an EMC setting, both single and double liquid distributors may be used. Most commonly double liquid distributors are used. Double liquid distributors are liquid distributors packed with more than one volute part. Thus, the liquid distributor of the present disclosure may be formed from a first volute part and a second volute part, the first volute part and the second volute part being in fluid communication with respective individual feed inlets. In such circumstances, one feed may comprise an aqueous solution of slaked lime with erosive and abrasive particles (e.g. CaSO₄ and flue ash), pH > 13 and temperatures of 30 - 60 °C, and the other feed may comprise waste-water with a large quantity of chlorine.

In one embodiment of the present disclosure, the first volute part and the second volute part are made from the same or different polyurethanes or elastomers. The difference in chemical properties of the liquid feeds may require polyurethane or elastomer materials with different properties in terms of e.g. resistance to erosion and corrosion. Thus, being able to match the polyurethane or elastomer materials according to the liquids passed through the individual volute parts of the liquid distributor provides increased durability and a prolonged lifespan of the liquid distributor of the present inventive concept.

According to an embodiment of the present inventive concept, the liquid distributor is provided as a double liquid distributor which comprises a separation disc, the separation disc comprising a base portion, a socket portion, and an opening. For both the single and liquid distributors, the separation disc has the additional function of serving as a cap for the volute part(s). In the assembled state of the liquid distributor, the separation disc is mounted with the volute part so that the opening of the separation disc is an extension of the opening of the volute, thus ensure fluid communication from the inlet to the outlet of the liquid distributor. Furthermore, the socket portion of the separation disc is designed to fit in the outlet opening of the volute part.

In a particular embodiment, the double liquid distributor comprises a separation disc made from a stainless steel, a nickel alloy, a polyurethane or an elastomer. In particular, the separation disc can be made from a Hastelloy^{®}. If the separation disc is made from an elastomer or a polyurethane, the properties of these materials, including their shore hardness and stiffness, are chosen to provide a material which is suitable for double liquid distributors for rotary atomizer used in corrosive and abrasive environments.

The polyurethane or elastomer volute parts are preferably constrained in the liquid distributor using the separation disc of the present inventive concept. Thus, in one embodiment, the liquid distributor further comprises at least one protrusion which is formed on the base portion of the volute part, the at least one protrusion being configured for engaging a corresponding at least one recess formed in the base portion of the separation disc. In a further embodiment, the at least one protrusion of the volute part and the corresponding recess on the separation disc extend in an angular direction and have identical shapes, ensuring a sealing function. In a particular embodiment, the recess is formed on an edge of the channel of the volute part.

The sealing function disclosed herein is an integrated sealing which, without being bound by theory, is believed to reduce leakage of liquids from the liquid distributor upon exposure of the liquid distributor to repeated heating and cooling cycles during operation. When the liquid distributor is cooled down, the polyurethane will contract in all directions and water may leak from the sides or from any nuts used for the assembly of the liquid distributor. In addition to the fact that there is no risk of dislocating an integrated sealing, the inventors have found that the addition of integrated seals in the volute part(s) and the separation disc(s) of the liquid distributor constrains the radial contraction of the liquid distributor during cooling and thus reduces the risk of leakage from the liquid distributor.

The endurance and easy assembly of the liquid distributor are further improved according to another embodiment of the disclosure, wherein the volute part and the separation disc are assembled by a mechanical connection comprising an end stop to control the height of the volute parts during assembly with the separation disc. The control of the height via the bushings allows for a constant pre-load of the liquid distributor. Pre-loading or pre-tensing of the polyurethane or elastomer of the volute part results in the material being able to shrink and not expand when in the mounted state in the liquid distributor. When the liquid distributor is subjected to elevated temperatures the polyurethane will expand radially and decrease in thickness. This property is accounted for using the integrated sealings of the present disclosure. Thus, by the dual-action of the integrated sealings and mechanical connection with end stop as disclosed herein, is provided a liquid distributor with satisfactory performance and durability.

In one embodiment, the mechanical connection with end stop comprises at least one screw with shoulder. This provides for a simple and reliable connection, which at the same time provides for a facilitated assembly. Preferably, each screw with shoulder cooperates with a cylindrical liner, which improves the alignment and ease of assembly even further. Optionally, additional fasteners may be provided.

In an additional embodiment, the base portion of the volute part and the separation disc each further comprise at least one additional through-hole configured for receiving an assembly screw, wherein the assembly screw is used to for fixedly assembly of the liquid distributor. The components of the mechanical connection with end stop and assembly screws may be made from any material known to be suitable for such applications.

In one embodiment the liquid distributor is pre-assembled prior to mounting to the rotary atomizer wheel in the spray drying apparatus. In particular, a double liquid distributor according to the present inventive concept, has a total weight of approximately 4 kg or less, which is substantially lighter compared to conventional stainless steel double liquid distributor which is known to weight approximately 10 kg or more. In addition, the possibility of providing the liquid distributor in a pre-assembled form reduces risks of assembling errors, which may cause for leakage of liquids from the liquid distributor and thus, increased wear, including progressed corrosion, on the inner parts of the spray drying apparatus.

In view of the above, the liquid distributor of the present inventive concept is suitable for installation in an EMC plant. Thus, a second aspect of the present inventive concept relates to a spray drying apparatus comprising a drying chamber and a rotary atomizer including a liquid distributor according to the present disclosure, wherein the spray drying apparatus forms part of an emission control (EMC) plant. In particular, the liquid distributor is designed in a material that does not deteriorate in chloric and/or abrasive liquids. Furthermore, the liquid distributor is designed in a way that ensures that no leakage occurs, even after the liquid distributor has been exposed to high pressures, elevated temperatures and corrosive liquids. Additionally, the liquid distributor has an increased durability and a prolonged lifetime as compared to conventional liquid distributors of spray dryer absorbers used in EMC plants.

### Brief Description of Drawings

The invention will be described in more detail below by means of nonlimiting examples of embodiments and with reference to the schematic drawing, in which
Fig. 1 shows a spray drying apparatus according to the inventive concept for use in emission control;
Fig. 2 is a schematic cross-sectional view of rotary atomizer in an embodiment of the invention;
Fig. 3 is a partial cross-sectional view of a prior art rotary atomizer;
Fig. 4 shows a prior art disassembled liquid distributor;
Fig. 5 is a perspective cross-sectional view of a prior art liquid distributor;
Fig. 6 is a perspective view of a disassembled liquid distributor in an embodiment of the invention;
Fig. 7 is a perspective cross-sectional view of an assembled double liquid distributor in an embodiment of the invention;
Fig. 8a is a perspective cross-sectional view of an assembled double liquid distributor in an alternative embodiment of the invention;
Fig. 8b is a perspective view of the assembled double liquid distributor in the embodiment of Fig. 8a; and
Fig. 9 is a perspective view of an assembled double liquid distributor in an embodiment of the invention.

The invention is not limited to the embodiment/s illustrated in the drawings. Accordingly, it should be understood that where features mentioned in the appended claims are followed by reference signs, such signs are included solely for the purpose of enhancing the intelligibility of the claims and are in no way limiting on the scope of the claims.

### Description of Embodiments

The present invention will now be described more fully hereinafter with reference to the accompanying drawings, in which embodiments of the invention are shown. This invention may, however, be embodied in many different forms and should not be construed as limited to the embodiments set forth herein; rather, these embodiments are provided for thoroughness and completeness.

Elements present in the drawing figures of prior art apparatuses are denoted by reference numerals to which ' has been added for elements having the same or analogous function as in embodiments according to the invention.

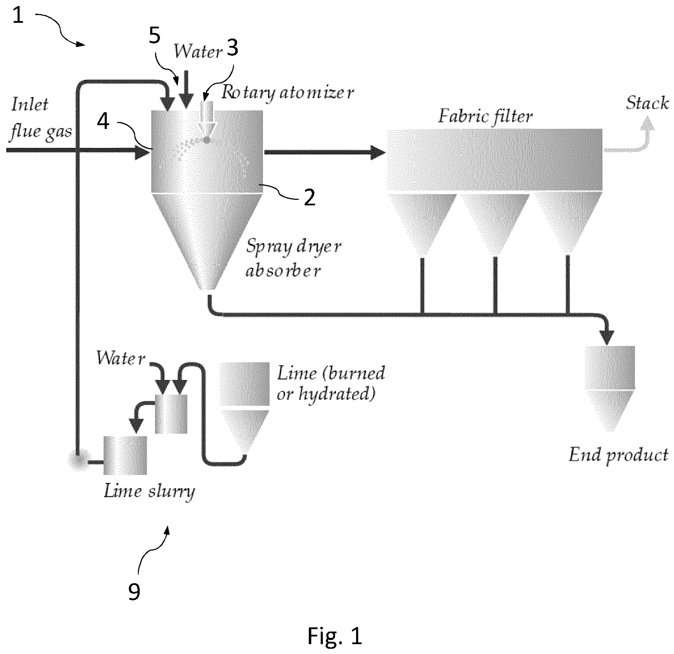

Fig. 1 shows a spray drying apparatus 1 according to the inventive concept for use in emission control. The spray drying apparatus 1 comprises a chamber which in the present context will be referred to as an absorption chamber 2, a rotary atomizer 3, an inlet 4 for flue gas and an inlet 5 for liquid feed. The liquid feed is introduced into the absorption chamber 2 of the spray drying apparatus 1 via the rotary atomizer 3. The feed inlet 5 is supplied with a liquid feed from a liquid supply 9, e.g. a liquid supply 9 external to the spray drying apparatus 1. For the spray drying apparatus 3 used in emission control EMC plants, the liquid supply 9 can be one or more tanks with different types of feed, e.g. one feed comprising an aqueous solution of slaked lime with erosive and abrasive particles, and another feed with waste water comprising a high concentration of chlorine. In the embodiment shown, the inlet 4 for flue gas is located in a top section of the spray drying apparatus 3 so that the flue gas will meet the liquid feed droplets exiting from the rotary atomizer 3 also positioned in the top section of the spray drying apparatus 3. Other configurations are conceivable. During the spray drying absorption, gas exits from the top section of the spray drying apparatus 3 and solids exit from the bottom section of the spray drying apparatus 3.

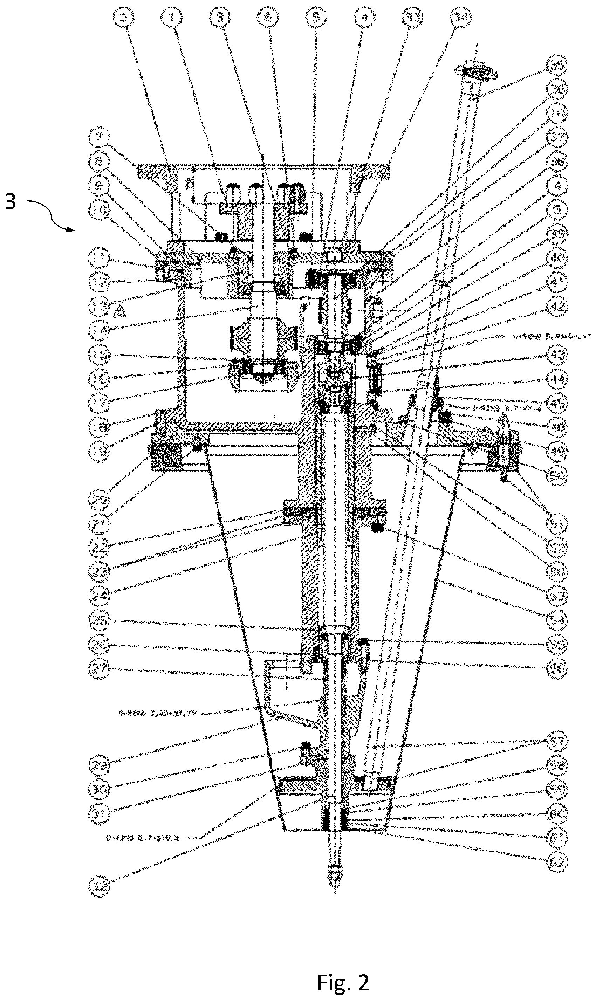

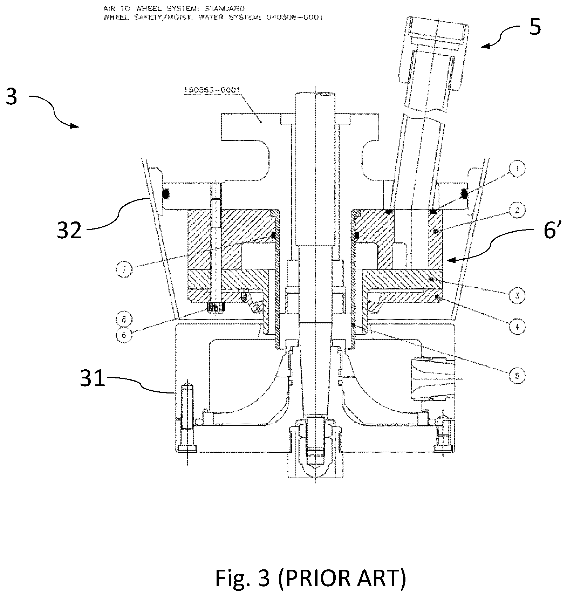

The configuration of the rotary atomizer 3 is seen in more detail in Figs 2 and 3, of which Fig. 3 includes a prior art liquid distributor 6'. The rotary atomizer 3 comprises an atomizer wheel 31 and an atomizer skirt 32. The liquid which is to be fed to the atomizer wheel 31 is supplied via the inlet 5 connected to the liquid distributor 6'. The atomizer skirt 32 constitutes a frustoconical protective member of the rotary atomizer 3 and is made from a material suitable for shielding the components of the atomizer 3 from the corrosive and abrasive environment to which the spray drying apparatus 1 is subjected.

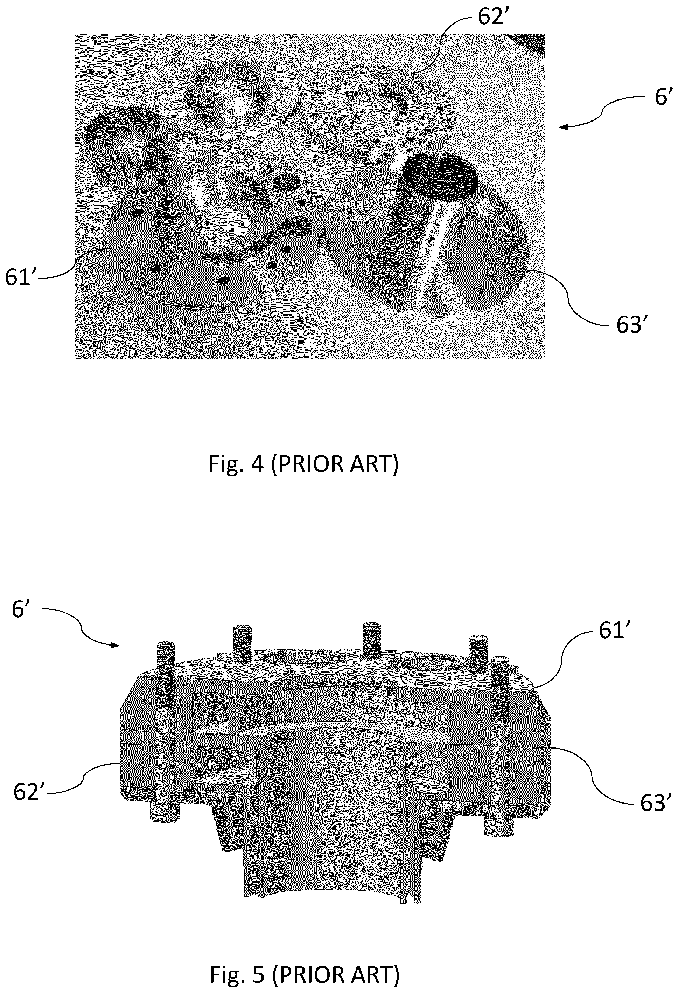

The prior art liquid distributor 6' is shown in more detail in Figs 4 and 5. The liquid distributor 6' comprises two volute parts 61', 62' and a separation disc 63'. This configuration is denoted a double liquid distributor. In Figs 4 and 5 the components of the liquid distributor 6' which are in contact with the abrasive and corrosive liquids are made Hastelloy^{®} or a similar nickel alloy, while parts which are not in contact with the liquids are made from a steel material, in particular stainless steel. Fig. 5 furthermore shows the liquid distributor 6' as a double liquid distributor in an assembled state.

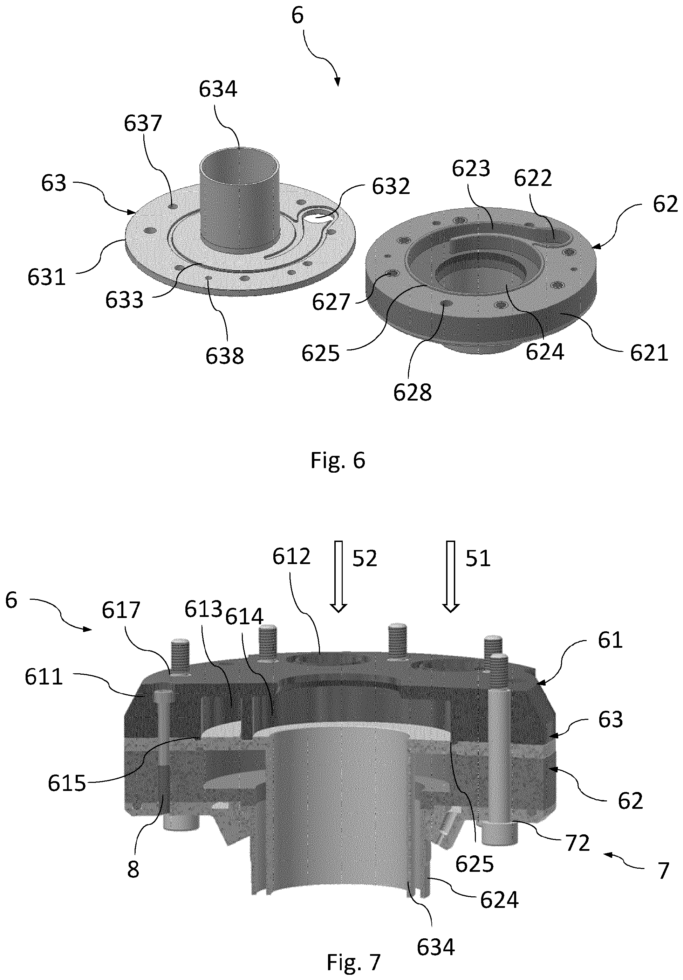

Figs 6 and 7 show the liquid distributor 6 in an embodiment of the present inventive concept. The liquid distributor 6 comprises at least one volute part 61, 62 made from a polyurethane or elastomer. When more than one volute part 61, 62 is used to assemble the liquid distributor 6 to a multi-liquid distributor, a separation disc 63 is included between adjacent volute parts, here between the first volute part 61 and the second volute part 62. In the embodiment shown, two volute parts 61, 62 are present, which together with the separation disc 63 form a double liquid distributor 6. The feed inlet 5 here comprises a first feed inlet 51 and a second feed inlet 52 in fluid communication with the rotary atomizer wheel 3 via the liquid distributor 6. As seen from Fig. 7, it is appreciated that for the double liquid distributor, the separation disc has the further function as an end cap of the liquid distributor. For the single liquid distributor, the separation disc will serve only as an end cap of the liquid distributor.

Each volute part 61, 62 includes a base portion 611, 621 and an inlet opening 612, 622 in fluid communication with the respective individual feed inlet 51, 52 which supply the aqueous solution of slaked lime and waste water, respectively, to the liquid distributor 6.

Referring again briefly to Fig. 3 for the position of the atomizer wheel 31 relative to the liquid distributor, and as seen in Fig. 6 which shows the second volute part 62 and the separation disc 63 (shown upside-down relative to its mounted position), the fluid communication between the first feed inlet 51 and the rotary atomizer wheel 31 is provided via a channel 623 formed in the base portion 621 of the second volute part 62, between the inlet opening 622 and an outlet opening 624. The separation disc 63 comprises an opening 632 and a socket portion 634 fitting into the outlet opening 624 of the second volute part 62 such that an annular slit is formed through which the first feed may pass.

Correspondingly, the first volute part 61 is provided with an inlet opening 612 and a channel 613 leading to an outlet opening 614 which in the assembled position shown in Fig. 7 is placed at the socket portion 634 of the separation disc 63.

In the particular embodiment of Figs 6 and 7, a protrusion 625 follows the contour of the channel 623 of the second volute part 62. The protrusion 625 is formed to engage with a corresponding recess 633 formed in a base portion 631 of the separation disc 63. A counterpart protrusion 615 is formed in the first volute part 61 to cooperate with a corresponding recess (not shown) in the upper side of the base portion 631 of the separation disc 63. The cooperation between the protrusions 615, 625 and the respective recesses 633 provide for a consistent sealing action.

The assembled double liquid distributor 6 in the embodiment of the present inventive concept furthermore comprises a mechanical connection 7 comprising an end stop to control the height of the volute parts during assembly with the separation disc. In the embodiment shown in Fig. 7, the mechanical connection with end stop comprises at least one screw with shoulder 72, here seen to the right in Fig. 7. As indicated, assembly screws 8 are provided as well.

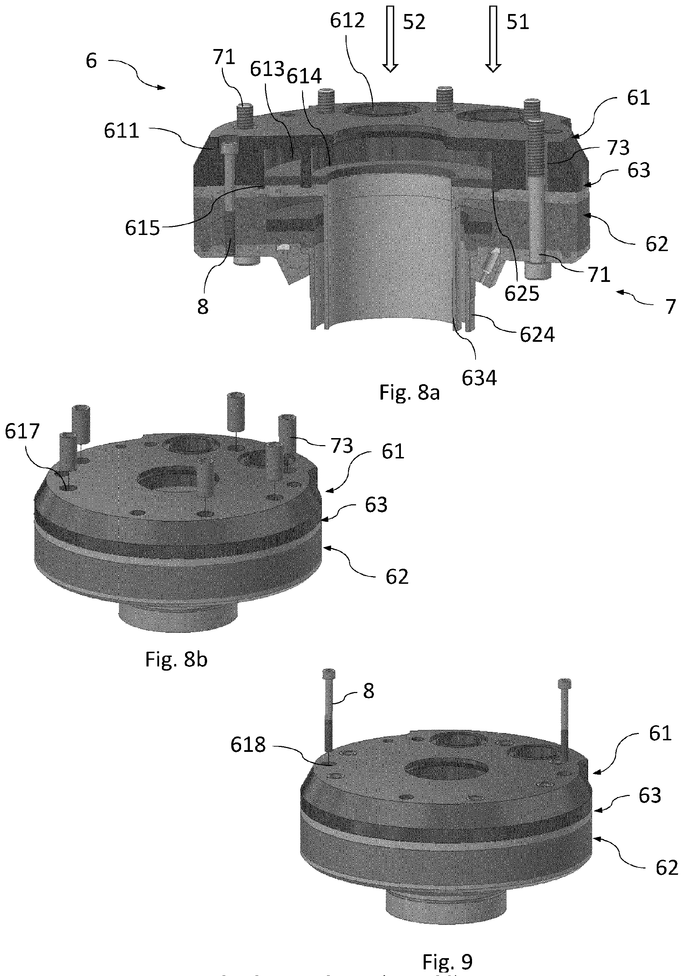

In the alternative embodiment shown in Fig. 8a, the mechanical connection 7 comprises at least one fastener 71 cooperating with a cylindrical liner 73. In the assembled condition shown in Fig. 8, a number of cylindrical liners 73 are shown as well.

In order to receive the screws with shoulders 72, or the fasteners 71 with cylindrical liners 73, and any assembly screws 8 each of the volute parts 61, 62 and the separation disc 63 is provided with through-holes 617, 627, 637 and 618, 628, 638. The number and diameter of the through-holes may be chosen in accordance with the dimensions of and requirements to the liquid distributor; suitable ranges include the shown six fasteners 71 with linings 73, or a corresponding number of screws with shoulder 72, and two assembly screws 8.

The materials of the components of the liquid distributor are chosen as set out in the introductory portion of the description and the appended claims.

### List of reference numerals

- 1: spray drying apparatus
- 2: absorption chamber
- 3: rotary atomizer
- 31: atomizer wheel
- 32: atomizer skirt / frustoconical protective member
- 4: inlet (flue gas)
- 5: inlet (liquid)
- 51: first feed inlet (for aqueous solution of slaked lime)
- 52: second feed inlet (for waste water)
- 6, 6': liquid distributor
- 61, 61': first volute part
- 611: base portion
- 612: inlet opening
- 613: channel
- 614: outlet opening
- 615: protrusion
- 617, 618: through-hole
- 62, 62': second volute part
- 621: base portion
- 622: inlet opening
- 623: channel
- 624: outlet opening
- 625: protrusion
- 627, 628: through-hole
- 63, 63': separation disc
- 631: base portion
- 632: opening
- 633: recess
- 634: socket portion
- 637, 638: through-hole
- 7: mechanical connection
- 71: fastener
- 72: screw with shoulder
- 73: cylindrical liner
- 8: assembly screws
- 9: liquid supply

## Claims

1. A rotary atomizer (3) for a spray drying apparatus, the rotary atomizer (3) comprising a liquid distributor (6) and a rotary atomizer wheel (31), the liquid distributor (6) comprising:
at least one feed inlet (5), and
at least one volute part (61, 62) comprising a base portion (611, 621), at least one inlet opening (612, 622), a channel (613, 623) and an outlet opening (624),
wherein the at least one feed inlet (5) is in fluid communication with the rotary atomizer wheel (31) through the at least one volute part (61, 62), and
the at least one volute part (61) is made from a polyurethane or elastomer, wherein the polyurethane or elastomer has a shore hardness in the range of 65A-100A or 20D-60D as measured on a Durometer according to ASTM D2240.

2. The rotary atomizer (3) according to claim 1, wherein the polyurethane or elastomer has a shore hardness in the range of 70A-90A or 22D-39D.

3. The rotary atomizer (3) according to any of claims 1 or 2, wherein the at least one volute part (61) is a first volute part (61) and the liquid distributor (6) further comprises a second volute part (62), the first volute part (61) and the second volute part (62) being in fluid communication with respective individual feed inlets (51, 52).

4. The rotary atomizer (3) according to claim 3, wherein the liquid distributor (6) further comprises a separation disc (63), the separation disc (63) comprising a base portion (631), a socket portion (634) and an opening (632).

5. The rotary atomizer (3) according to claim 4, wherein the separation disc (63) is made from a stainless steel, a nickel alloy, a polyurethane or an elastomer.

6. The rotary atomizer (3) according to any of the preceding claims, wherein the first volute part (61) and the second volute part (62) are made from the same or different polyurethanes or elastomers.

7. The rotary atomizer (3) according to any of the preceding claims, wherein at least one protrusion (615, 625) is formed on the base portion (611, 621), the at least one protrusion (615, 625) being configured for engaging a corresponding at least one recess (633) formed in the base portion (631) of the separation disc (63).

8. The rotary atomizer (3) according to claim 7, wherein the at least one protrusion (625) of the volute part (61, 62) and the corresponding recess (633) on the separation disc (63) extend in an angular direction and have identical shapes.

9. The rotary atomizer (3) according to any of the preceding claims, wherein the volute parts (61, 62) and the separation disc (63) are assembled by a mechanical connection (7) comprising an end stop to control the height of the volute parts (61, 62) during assembly with the separation disc (63).

10. The rotary atomizer (3) according to claim 9, wherein the mechanical connection with end stop comprises at least one screw with shoulder (72).

11. The rotary atomizer (3) according to claim 9, wherein the mechanical connection (7) comprises at least one fastener (71) cooperating with a cylindrical liner (73).

12. The rotary atomizer (3) according to any of claims 9 to 11, wherein the base portion (621, 631) comprises at least one additional through-hole (618, 628, 638) configured for receiving an assembly screw (8), wherein the assembly screw (8) is used to for fixed assembly of the liquid distributor (6).

13. The rotary atomizer (3) according to any one of claims 3 to 12, wherein the first volute part (61) and the second volute part (62) are pre-assembled prior to mounting to the rotary atomizer wheel (31).

14. A spray drying apparatus (1) comprising an absorption chamber (2) and a rotary atomizer according to any of the proceeding claims.

## Patentansprüche

1. Rotationszerstäuber (3) für eine Sprühtrocknungsvorrichtung, wobei der Rotationszerstäuber (3) einen Flüssigkeitsverteiler (6) und ein Rotationszerstäuberrad (31) umfasst, wobei der Flüssigkeitsverteiler (6) Folgendes umfasst:
mindestens einen Zufuhreinlass (5) und
mindestens einen Spiralteil (61, 62), umfassend einen Basisabschnitt (611, 621) und mindestens eine Einlassöffnung (612, 622), einen Kanal (613, 623) und eine Auslassöffnung (624),
wobei der mindestens eine Zufuhreinlass (5) mit dem Rotationszerstäuberrad (31) durch den mindestens einen Spiralteil (61, 62) in Fluidverbindung steht und
der mindestens eine Spiralteil (61) aus einem Polyurethan oder Elastomer gefertigt ist, wobei das Polyurethan oder Elastomer, mit einem Durometer nach ASTM D2240 gemessen, eine Shore-Härte im Bereich von 65A-100A oder 20D-60D aufweist.

2. Rotationszerstäuber (3) nach Anspruch 1, wobei das Polyurethan oder Elastomer eine Shore-Härte im Bereich von 70A-90A oder 22D-39D aufweist.

3. Rotationszerstäuber (3) nach einem der Ansprüche 1 oder 2, wobei der mindestens eine Spiralteil (61) ein erster Spiralteil (61) ist und der Flüssigkeitsverteiler (6) ferner einen zweiten Spiralteil (62) umfasst, wobei der erste Spiralteil (61) und der zweite Spiralteil (62) mit jeweiligen einzelnen Zufuhreinlässen (51, 52) in Fluidverbindung stehen.

4. Rotationszerstäuber (3) nach Anspruch 3, wobei der Flüssigkeitsverteiler (6) ferner eine Trennscheibe (63) umfasst, wobei die Trennscheibe (63) einen Basisabschnitt (631), einen Buchsenabschnitt (634) und eine Öffnung (632) umfasst.

5. Rotationszerstäuber (3) nach Anspruch 4, wobei die Trennscheibe (63) aus Edelstahl, einer Nickellegierung, einem Polyurethan oder einem Elastomer gefertigt ist.

6. Rotationszerstäuber (3) nach einem der vorstehenden Ansprüche, wobei der erste Spiralteil (61) und der zweite Spiralteil (62) aus demselben oder unterschiedlichen Polyurethanen oder Elastomeren gefertigt sind.

7. Rotationszerstäuber (3) nach einem der vorstehenden Ansprüche, wobei mindestens ein Vorsprung (615, 625) am Basisabschnitt (611, 621) ausgebildet ist, wobei der mindestens eine Vorsprung (615, 625) dazu ausgelegt ist, in eine zugehörige mindestens eine Aussparung (633) einzugreifen, die im Basisabschnitt (631) der Trennscheibe (63) ausgebildet ist.

8. Rotationszerstäuber (3) nach Anspruch 7, wobei sich der mindestens eine Vorsprung (625) des Spiralteils (61, 62) und die zugehörige Aussparung (633) an der Trennscheibe (63) in eine Winkelrichtung erstrecken und identische Formen aufweisen.

9. Rotationszerstäuber (3) nach einem der vorstehenden Ansprüche, wobei die Spiralteile (61, 62) und die Trennscheibe (63) durch eine mechanische Verbindung (7) montiert sind, die einen Endanschlag umfasst, um die Höhe der Spiralteile (61, 62) während der Montage mit der Trennscheibe (63) zu steuern.

10. Rotationszerstäuber (3) nach Anspruch 9, wobei die mechanische Verbindung mit dem Endanschlag mindestens eine Schraube mit Schulter (72) umfasst.

11. Rotationszerstäuber (3) nach Anspruch 9, wobei die mechanische Verbindung (7) mindestens ein Befestigungselement (71) umfasst, das mit einer zylindrischen Auskleidung (73) zusammenwirkt.

12. Rotationszerstäuber (3) nach einem der Ansprüche 9 bis 11, wobei der Basisabschnitt (621, 631) mindestens eine zusätzliche Durchgangsbohrung (618, 628, 638) umfasst, die dazu ausgelegt ist, eine Montageschraube (8) aufzunehmen, wobei die Montageschraube (8) für die feste Montage des Flüssigkeitsverteilers (6) verwendet wird.

13. Rotationszerstäuber (3) nach einem der Ansprüche 3 bis 12, wobei der erste Spiralteil (61) und der zweite Spiralteil (62) vor der Montage am Rotationszerstäuberrad (31) vormontiert sind.

14. Sprühtrocknungsvorrichtung (1), umfassend eine Absorptionskammer (2) und einen Rotationszerstäuber nach einem der vorstehenden Ansprüche.

## Revendications

1. Atomiseur rotatif (3) pour un appareil de séchage par atomisation, l'atomiseur rotatif (3) comprenant un distributeur de liquide (6) et une roue tournante d'atomiseur (31), le distributeur de liquide (6) comprenant :
au moins une entrée d'alimentation (5), et
au moins une partie de volute (61, 62) comprenant une portion de base (611, 621), au moins une ouverture d'entrée (612, 622), un canal (613, 623) et une ouverture de sortie (624),
dans lequel l'au moins une entrée d'alimentation (5) est en communication fluidique avec la roue tournante d'atomiseur (31) par le biais de l'au moins une partie de volute (61, 62), et
l'au moins une partie de volute (61) est fabriquée à partir d'un polyuréthane ou d'un élastomère, le polyuréthane ou l'élastomère ayant une dureté Shore dans la plage de 65A-100A ou 20D-60D telle que mesurée sur un duromètre conformément à la norme ASTM D2240.

2. Atomiseur rotatif (3) selon la revendication 1, dans lequel le polyuréthane ou l'élastomère a une dureté Shore dans la plage de 70A-90A ou 22D-39D.

3. Atomiseur rotatif (3) selon l'une quelconque des revendications 1 et 2, dans lequel l'au moins une partie de volute (61) est une première partie de volute (61) et le distributeur de liquide (6) comprend en outre une deuxième partie de volute (62), la première partie de volute (61) et la deuxième partie de volute (62) étant en communication fluidique avec des entrées d'alimentation individuelles respectives (51, 52).

4. Atomiseur rotatif (3) selon la revendication 3, dans lequel le distributeur de liquide (6) comprend en outre un disque de séparation (63), le disque de séparation (63) comprenant une portion de base (631), une portion faisant manchon (634) et une ouverture (632).

5. Atomiseur rotatif (3) selon la revendication 4, dans lequel le disque de séparation (63) est fabriqué à partir d'un acier inoxydable, d'un alliage de nickel, d'un polyuréthane ou d'un élastomère.

6. Atomiseur rotatif (3) selon l'une quelconque des revendications précédentes, dans lequel la première partie de volute (61) et la deuxième partie de volute (62) sont fabriquées à partir de polyuréthanes ou d'élastomères identiques ou différents.

7. Atomiseur rotatif (3) selon l'une quelconque des revendications précédentes, dans lequel au moins une saillie (615, 625) est formée sur la portion de base (611, 621), l'au moins une saillie (615, 625) étant conçue pour entrer en prise avec au moins une encoche correspondante (633) formée dans la portion de base (631) du disque de séparation (63).

8. Atomiseur rotatif (3) selon la revendication 7, dans lequel l'au moins une saillie (625) de la partie de volute (61, 62) et l'encoche correspondante (633) sur le disque de séparation (63) s'étendent dans une direction angulaire et ont des formes identiques.

9. Atomiseur rotatif (3) selon l'une quelconque des revendications précédentes, dans lequel les parties de volute (61, 62) et le disque de séparation (63) sont assemblés par une connexion mécanique (7) comprenant une butée de fin de course pour contrôler la hauteur des parties de volute (61, 62) pendant l'assemblage avec le disque de séparation (63).

10. Atomiseur rotatif (3) selon la revendication 9, dans lequel la connexion mécanique avec butée de fin de course comprend au moins une vis avec épaulement (72).

11. Atomiseur rotatif (3) selon la revendication 9, dans lequel la connexion mécanique (7) comprend au moins une attache (71) coopérant avec une chemise cylindrique (73).

12. Atomiseur rotatif (3) selon l'une quelconque des revendications 9 à 11, dans lequel la portion de base (621, 631) comprend au moins un trou débouchant supplémentaire (618, 628, 638) conçu pour recevoir une vis d'assemblage (8), la vis d'assemblage (8) étant utilisée pour un assemblage fixe du distributeur de liquide (6).

13. Atomiseur rotatif (3) selon l'une quelconque des revendications 3 à 12, dans lequel la première partie de volute (61) et la deuxième partie de volute (62) sont préassemblées avant d'être montées sur la roue tournante d'atomiseur (31).

14. Appareil de séchage par atomisation (1) comprenant une chambre d'absorption (2) et un atomiseur rotatif selon l'une quelconque des revendications précédentes.
